# EUROPEAN PATENT SPECIFICATION

(11) **EP 1 453 912 B1**
(45) Date of publication and mention of the grant of the patent: **05.03.2008**
(21) Application number: 02786215.0
(22) Date of filing: 26.11.2002
(51) Int. Cl.: C08L 23/16, C08L 53/00, C08L 23/12, C08L 23/04

(54) **THERMOPLASTIC ELASTOMER WITH IMPROVED PROPERTIES**
THERMOPLASTISCHE ELASTOMERZUSAMMENSETZUNG MIT VERBESSERTER EIGENSCHAFT
ELASTOMERE THERMOPLASTIQUE A PROPRIETES AMELIOREES

(30) Priority: 05.12.2001 NL 1000887
(43) Date of publication of application: 08.09.2004
(73) Proprietor: DSM IP Assets B.V., 6411 TE Heerlen (NL)
(72) Inventor: WILLEMS, Edwin, NL-6136 BV Sittard (NL)
(74) Representative: Mooij, Johannes Jacobus
(86) International application number: PCT/NL2002/000765
(87) International publication number: WO 2003/048252

(56) References cited:
- EP-A- 0 911 364
- WO-A-02/18487
- WO-A-98/44041

## Description

The invention relates to a thermoplastic elastomer composition comprising a thermoplastic polyolefinic polymer, an elastomer and oil.

Such thermoplastic elastomer compositions are known from "Handbook of Thermoplastic Elastomers", chapter 3, Van Nostrand Reinhold, New York (1988). The thermoplastic elastomer composition described comprise a blend of a thermoplastic polyolefinic polymer, an elastomer and hydrocarbon oil. A drawback of the described thermoplastic elastomer compositions is the fact that for many applications the low temperature impact properties are insufficient, especially for high hardness compositions. This poor low temperature impact performance can be ascribed to the presence of the thermoplastic polyolefinic polymer in the thermoplastic elastomer composition. The higher the quantity of thermoplastic polyolefinic polymer the worse the low temperature impact performance.

The object of the present invention is to completely or largely eliminate the stated drawback.

This object is achieved in that the thermoplastic elastomer composition according to the invention is characterised in that the oil is isoparaffinic oil and the elastomer has a gel content of less then 50%.

Surprisingly, it has been found that the thermoplastic elastomer compositions according to the invention show very good low temperature impact properties. A further advantage is that the thermoplastic elastomer compositions show a good UV resistance. Moreover the thermoplastic elastomer compositions have a low fogging value which makes them suitable for use in for example automotive interior applications.

It is very supprising that the good results are obtained by the selection of a specific oil in combination with an elastomer having the relatively low gel content.

From EP-A-315363 it is known to prepare EPDM compositions comprising a polyalpha-olefinic oil. However, EP-A-315363 is silent about the impact resistance of the EPDM compositions and does not mention nor suggest thermoplastic elastomers, let's say thermoplastic elastomers comprising an elastomer having a gel content of less than 50 %.

In WO 02/18487 a thermoplastic elastomer composition is described which comprises:
a) a thermoplastic polyolefinic polymer
b) a vulcanized elastomer in which the quantity of a) is 10-90 % by weight and the quantity of b) is 90-10 % by weight relative to the total quantity of thermoplastic polyolefin polymer and vulcanized elastomer and
c) 1-250 parts of oil per 100 parts of elastomer, in which the oil comprises an isoparaffinic oil.
However, WO 02/18487 is silent about thermoplastic elastomer compositions comprising an elastomer having a gel content of less than 50%.

Examples of suitable thermoplastic polyolefinic polymers are polyethylene, polypropylene, random or block copolymers of polypropylene or a mixture of any of them.

Preferably the thermoplastic elastomer composition comprises polyethylene or polypropylene as thermoplastic polyolefinic polymer, more preferably the thermoplastic elastomer composition comprises a polypropylene blockcopolymer, comprising a block of polypropylene homopolymer and an elastomeric block of a random copolymer of ethylene and propylene.

A suitable quantity of the thermoplastic polyolefine polymer in the thermoplastic elastomer composition according to the invention is for example between 10-90 % by weight relative to the total quantity of thermoplastic polyolefinic polymer, elastomer and oil. Preferably the quantity of the thermoplastic polyolefinic polymer is between 20-80 % by weight relative to the total quantity of thermoplastic polymer, elastomer and oil. More preferably the quantity of the thermoplastic polyolefinic polymer is between 30-60 % by weight relative to the total quantity of thermoplastic polymer, elastomer and oil. If a polypropylene blockcopolymer is used, the amount in weight of the block of polypropylene homopolymer is counted as polyolefinic polymer and the amount in weight of the elastomeric block of the random copolymer of ethylene and propylene is counted as elastomer.

Examples of suitable elastomers are the following elastomers or a mixture thereof: SBR (styrene-butadiene rubber, copolymer of styrene and butadiene), NBR (nitrile rubber, copolymer of butadiene and acrylonitrile), IIR (butyl rubber, copolymer of isobutene and isoprene) or BR (butadiene rubber). Other examples of suitable elastomers are styrene-containing block copolymers: SBS (Styrene butadiene block copolymer), SEBS (styrene ethylene/butadiene styrene block copolymer), SIPS (styrene isoprene block copolymer).

Preferably, the elastomer in the thermoplastic elastomer composition according to the invention is an olefinic elastomer. It is especially preferred for the elastomer in the thermoplastic elastomer composition according to the invention to be a copolymer of ethylene, propylene and a third monomer (EPDM), a copolymer of ethylene and propylene (EPM), copolymers of ethylene with higher alpha-olefins, preferably a copolymer of ethylene and 1-butene, ethylene and 1-hexene or ethylene and 1-octene, the copolymer of ethylene and the higher alpha-olefin preferably being produced by using a metallocene catalyst, or a mixture of EPDM and/or EPM, with a further elastomer, preferably styrene butadiene block copolymer (SBS) and/or styrene ethylene/butadiene styrene block copolymer (SEBS).

The degree of vulvanization of the elastomer can be expressed in gel content. Gel content is the ratio of the amount in weight of non-soluble elastomer and the total amount in weight of elastomer of a specimen soaked in an organic solvent for the elastomer. The method to measure gel content is described in US-A-5100947. In general terms a specimen is soaked for 48 hours in an organic solvent for the elastomer at room temperature. After weighing of both the specimen before soaking and the dried residue of the specimen after soaking, the amount of non-soluble elastomer and total elastomer are calculated, based on knowledge of the relative amounts of all components in the composition.

The gel content of the elastomer of the thermoplastic elastomer of the present composition preferably is less than 25 %, preferably the gel content is about 0%. Preferably no vulcanization of the elastomer has taken place.

A suitable quantity of the elastomer and oil in the thermoplastic elastomer composition according to the invention is between 90-10 % by weight relative to the total quantity of thermoplastic polyolefinic polymer, the elastomer and oil. Preferably, the quantity of the elastomer and oil is between 80-20 % by weight, more preferably between 70 and 40 % by weight relative to the total quantity of thermoplastic polyolefinic polymer and elastomer.
Preferably the thermoplastic elastomer composition according to the invention comprises:
A. 40 - 70 parts by weight of polypropylene blockcopolymer consisting of
   a1. 75 - 90 weight % block of polypropylene homopolymer
   a2. 10 - 25 weight % elastomeric block of random polymer of ethylene and propylene
B. 30 - 60 parts by weight of further elastomer and oil.

The thermoplastic elastomer composition according to the invention may comprise between 1-250 parts of oil per 100 parts of elastomer. Preferably the quantity of oil is between 50-200 parts per 100 parts of elastomer. It is especially preferred for the thermoplastic elastomer composition to comprise between 60-160 parts of oil per 100 parts of elastomer.

Any known isoparaffinic oil may be used in the thermoplastic elastomer composition according to the invention. Isoparaffinic oil is also known as polyalfaolefinic oil. Polyalfaolefinic oil may comprise oligomers of alpha-olefins which contain alpha-olefin monomer units of at least 3 carbon atoms. Examplary oligomers of alpha-olefins contain monomer units with from 6 to 12 carbon atoms. Preferred oligomers of alpha-olefins contain monomers with 10 carbon atoms. Preferably, use is made of isoparaffinic oil with a weight-average molecular weight of 1000 g/mole or lower. Isoparaffinic oil with a weight-average molecular weight of between 250 and 700 g/mole is especially preferred. Isoparaffinic oil with a weight-average molecular weight of between 400 and 600 g/mole is even more preferred.

In the thermoplastic elastomer composition according to the invention there may be present, besides the isoparaffinic oil, for example one or more other oils. Suitable oils that may be used in addition to the isoparaffinic oil are for example mineral paraffinic oil, naphthenic oil, aromatic oil or mixtures of any of them. Preferably a highly hydrogenated oil is used in which the concentration of aromatic compounds is preferably less than 4 wt.% and the concentration of polar compounds is less than 0.3 wt.%. The use of such oil has the advantage that less UV-ageing occurs. An example of such oil is PennzUltra (TM) 1199, supplied by Pennzoil in the United States of America. The quantity of isoparaffinic oil in the thermoplastic elastomer composition according to the invention is preferably at least 25 % by weight of the total quantity of oil. More preferably the thermoplastic elastomer composition comprises at least 50 % by weight isoparaffinic oil relative to the total quantity of oil.

In addition, the thermoplastic elastomer composition according to the invention may comprise one or a mixture of customary and known additives. Examples of such additives are fillers, reinforcing agents, colourants, stabilizers and scratch resistance improvers.
A suitable process for producing the thermoplastic elastomer compositions according to the invention which comprise dynamically vulcanized elastomer is known per se and is described in general terms in US-A-4,311,628. A suitable process comprises for example mixing and heating the thermoplastic polyolefinic polymer with the elastomer, the vulcanising agent and additives, if any, at a temperature above the melting point of the thermoplastic polyolefinic polymer in which the elastomer and the thermoplastic elastomer composition is formed. If a vulcanising agent is present, during mixing dynamical vulcanisation of the elastomer takes place, however by selecting the amount of vulcanisation agent, the mixing temperature, the residence time. The gel content of the elastomer is kept at a level of less than 50%.

Suitable equipment for preparing the thermoplastic elastomer according to the invention include batch mixers and continuous mixers, like for example twin screw extruders.

The point in time at which the oil that is present in the thermoplastic elastomer composition according to the invention is metered is not critical. In the process, the oil is added for example before or after the dynamic vulcanisation of the elastomer. It is also possible for the oil to be added partly before and partly after the dynamic vulcanisation of the elastomer. It is also possible for the elastomer used to be pre-mixed with the desired quantity of oil or a proportion thereof.

Suitable vulcanising agents for the thermoplastic elastomer composition according to the invention are the vulcanising systems known per se for vulcanising the stated elastomers. Examples of suitable vulcanising systems are systems based on phenolic resin, peroxide, alkoxysilane and hydrosilane compounds.

Preferably no vulcanisation agent is used at all.

The invention also related to moulded articles containing the thermoplastic elastomer composition according to the invention.

The thermoplastic elastomer composition according to the invention may be used in moulded articles which are applied in cars, equipment and constructions. Examples hereof are airbag covers, fuel lines, hoses, dashboard skins and door skins, housings, spoilers, mud flaps, seals, boots and bellows, strips, exterior trim, A, B and C-pillar. Dashboard skins, housings and door skins may be covering an airbag as well and as such are understood to be an airbag cover.
Preferrably the composition according to the invention is used in an airbag cover, as the composition shows a very good balance of properties for that application.

The invention is elucidated with reference to the following examples, without being limited thereto.

The following materials were used in the examples and the comparative experiments:
- EPDM 1, elastomer consisting of 52 % C2, 41 % C3 and 7 % ethylenenorbornene and comprising 16 % mineral oil (all % being expressed as weight %);
- EPDM 2, elastomer consisting of 67 % C2, 29 % C3 and 4 % ethylenenorbornene (all % being expressed as weight %);
- EPDM 3, elastomer consisting of 63 % C2, 33 % C3 and 4 % ethylenenorbornene (all % being expressed as weight %);
- EPDM 4, elastomer consisting of 58 % C2, 38 % C3 and 4 % ethylenenorbornene;
- PP1, polypropylene block copolymer comprising 77 weight % block of propylene homopolymer and 23 weight % of ethylene propylene random copolymer, having a melt flow index (2.16 kg/230 °C) of 2.0;
- PP2 homopolymer of propylene, having a melt flow index (2.16 kg/230 °C) of 1.0;
- talc (of Sigma-Aldrich);
- vulcanisation system based on phenolic resin and stannous chloride;
- antioxidant;
- isoparaffinic oil (Nexbase^{™} 2006 supplied by Neste); and
- Pennzultra^{™} 1199= paraffin mineral oil (firma Penzz oil, USA).

### Example 1, 2, 3

The ingredients as given in Table 1 were metered to a ZSK40^{™} double screw extruder supplied by Werner and Pfleiderer in Germany.
The extruder heating system had been adjusted to a temperature of 205°C.
The metered materials were mixed and so the thermoplastic elastomer was obtained. Test specimens were prepared from the obtained thermoplastic elastomer(s) and their properties were measured according to the test standards stated in Table 1, the results are given in Table 3.

### Comparative experiments A, B, C

The ingredients as given in Table 1 were metered to a ZSK40^{™} double screw extruder supplied by Werner and Pfleiderer in Germany.
The extruder heating system had been adjusted to a temperature of 205°C.
The metered materials were mixed , and during mixing the EPDM elastomer was dynamically vulcanized, and so a thermoplastic vulcanisate was obtained.
Test specimens were prepared from thermoplastic vulcanisates and their properties were measured according to the test standards stated in Table 2, the results are given in Table 3. Comparative experiments A, B and C differ with respectively examples 1, 2 and 3 only in that in the comparative experiments the elastomer of the composition is fully vulcanised (gel content > 97%) and that in the experiments the elastomer is not vulcanised at all (gel content < 50%).

**Table 1**

| Composition of the examples 1, 2 and 3 and comparative experiments A, B and C. Quantities are expressed as parts by weight. | | | | | | |
|---|---|---|---|---|---|---|
| Material | 1 | 2 | 3 | A | B | C |
| EPDM 1 | | 120 | 120 | | 120 | 120 |
| EPDM 2 | 100 | | | 100 | | |
| PP1 | | 380 | 305 | | 380 | 305 |
| PP2 | 240 | | | 240 | | |
| Talc | 5 | 5 | 5 | 5 | 5 | 5 |
| vulcanisation system | - | - | - | 5 | 5 | 5 |
| | | | | | | |
| antioxidant | 1.5 | 1.5 | 1.5 | 1.5 | 1.5 | 1.5 |
| Nexbase® 2006 | 100 | 80 | 80 | 100 | 80 | 80 |

**Table 2; Test methods for determination of material properties**

| Property | Test standard |
|---|---|
| Hardness | DIN 53505 |
| Tensile strength | ISO 37 |
| Modulus 100% | ISO 37 |
| Modulus 300% | ISO 37 |
| Elongation at break | ISO 37 |
| Compression set, 70 h/23°C | ISO 815/B |
| Compression set, 22 h/70°C | ISO 815/B |
| Notched Izod -40°C, -45°C, -50 °C, -55 °C, -60 °C | ISO 180/4 A |

**Table 3; Test results of examples 1, 2, 3 and comparative experiments A, B and C**

| Test | Unit | 1 | A | 2 | B | 3 | C |
|---|---|---|---|---|---|---|---|
| Hardness | Shore D | 41 | 41 | 41 | 41 | 36 | 36 |
| Tensile strength | MPa | 11.6 | 11.7 | 12.1 | 12.4 | 10.9 | 11.0 |
| Modulus 100% | MPa | 9.5 | 9.6 | 11.0 | 11.4 | 9.4 | 9.6 |
| Modulus 300% | MPa | 10.0 | 10.2 | 11.7 | 12.0 | 10.2 | 10.4 |
| Elongation at break | % | 575 | 567 | 434 | 413 | 471 | 465 |
| Compression set, 70 h/23°C | % | 49 | 48 | 60 | 55 | 57 | 52 |
| Compression set, 22 h/70°C | % | 68 | 65 | 78 | 73 | 74 | 72 |
| | | | | | | | |
| Notched Izod -40°C | - | D* | B/D* | D | D | D | D |
| Notched Izod energy | KJ/m2 | 68 | 45 | 81 | 61 | 81 | 76 |
| | | | | | | | |
| Notched Izod -45°C | - | D | B | D | B/D | D | D |
| Notched Izod energy | KJ/m2 | 63 | 6 | 82 | 41 | 80 | 70 |
| | | | | | | | |
| Notched Izod -50°C | - | D/B | - | D | B | D | D/B |
| Notched Izod energy | KJ/m2 | 29 | - | 79 | 9 | 78 | 27 |
| | | | | | | | |
| Notched Izod -55 | - | B | - | D/B | - | D | B |
| Notched Izod energy | KJ/m2 | 5 | - | 46 | - | 73 | 4 |
| | | | | | | | |
| Notched Izod -60 | - | - | - | B | - | D/B | - |
| Notched Izod energy | KJ/m2 | - | - | 3 | - | 29 | - |

| | | | | | | | |
|---|---|---|---|---|---|---|---|
| B = brittle fracture, D = ductile fracture | | | | | | | |

Analysis of the test results in Table 3 indicate that thermoplastic elastomer compositions according to the invention comprising isoparaffinic oil and having a gel content of less than 50 % show improved low temperature impact properties in comparison with the thermoplastic elastomer compositions comprising isoparaffinic oil and being fully vulcanised.

### Comparative experiments D, and E

Thermoplastic elastomer composition D was prepared according to example 1 and thermoplastic elastomer composition E was prepared according to comparative experiment A. The ingredients are given in Table 4, the results in Table 5.

From the comparison of comparative experiments D and E it becomes clear that for oil different than isoparaffinic oil the impact resistance at low temperature does not improve if the elastomer of the thermoplastic elastomer is not crosslinked (D is not crosslinked and E is fully crosslinked to a gel content of 100 %), while for thermoplastic elastomers comprising isoparaffinic oil a further increase in cold impact resistance is obtained as is shown in examples 1-3 and comparative experiments A-C.

**Table 4; Composition of comparative experiments D and E**

| (Quantities are expressed as parts by weight) | | |
|---|---|---|
| | **D** | **E** |
| EPDM 3 | 100 | 100 |
| EPDM4 | | |
| PP1 | 250 | 250 |
| Talc | 5 | 5 |
| Vulcanisation system | | 7.5 |
| Antioxidant | 1.5 | 1.5 |
| Pennzultra 1199 | 100 | 100 |
| Nexbase 2006 | | |

**Table 5; Results of comparative experiments D and E**

| **Test [untit]** | **D** | **E** |
|---|---|---|
| Hardness [Shore D] | 32 | 34 |
| Tensile strength [MPa] | 9.8 | 10.6 |
| Modulus 100% [MPa] | 8.9 | 9.5 |
| Modulus 300% [MPa] | 9.7 | 10.5 |
| Elongation [%] | 450 | 400 |
| Compression Set 70h/23°C [%] | 52 | 48 |
| Compression Set 22h/70°C [%] | 71 | 67 |
| | | |
| Notched Izod -40°C | D | D |
| Energy [kJ/m2] | 81 | 80 |
| | | |
| Notched Izod -45°C | D | D |
| Energy [kJ/m2] | 82 | 79 |
| | | |

| Notched Izod -50°C | B | B |
|---|---|---|
| Energy [kJ/m2] | 7 | 4 |
| | | |
| Notched Izod -55°C | | |
| Energy [kJ/m2] | | |

### Example 4 and comparative experiment F

A thermoplastic elastomer composition 4 according to the invention and thermoplastic composition F were prepared according to example 1. The ingredients are given in table 6, the results in table 7.

From the comparison between example 4 and comparative experiment F it becomes clear that the impact resistance at low temperature for a thermoplastic elastomer according to the invention, comprising isoparaffinic oil is better than for a thermoplastic elastomer comprising a different oil.

**Table 6; Composition of example 4 and comparative experiment F**

| (Quantities in parts by weight) | | |
|---|---|---|
| | **4** | **F** |
| EPDM 3 | | |
| EPDM4 | 100 | 100 |
| PP1 | 340 | 340 |
| Talc | 5 | 5 |
| Vulcanisation system | | |
| Antioxidant | 1.5 | 1.5 |
| Pennzultra 1199 | | 100 |
| Nexbase 2006 | 100 | |

**Table 7; Results of example 4 and comparative example F**

| **Test [untit]** | **4** | **F** |
|---|---|---|
| Hardness [Shore D] | 44 | 46 |
| Tensile strength [MPa] | 10.8 | 11.0 |
| Modulus 100% [MPa] | 9.9 | 10.2 |
| Modulus 300% [MPa] | 10.4 | 10.9 |
| Elongation [%] | 460 | 460 |
| Compression Set 70h/23°C [%] | 52 | 52 |
| Compression Set 22h/70°C [%] | 69 | 69 |
| | | |
| Notched Izod -40°C | D | D |
| Energy [kJ/m2] | 82 | 79 |
| | | |
| Notched Izod -45°C | D | D |
| Energy [kJ/m2] | 84 | 78 |
| | | |
| Notched Izod -50°C | D | B |
| Energy [kJ/m2] | 77 | 11 |
| | | |
| Notched Izod -55°C | B | |
| Energy [kJ/m2] | 9 | |

| | | |
|---|---|---|
| D= ductile B= brittle | | |

Summarising good results are obtained by the selction of a special oil. By this selection the resistance at low temperature is improved. Moreover this special oil shows the effect, contrary to the usual oils, that the impact resistance is still further improved, if the elastomer has a gel content of less than 50 %.

### Example 5 and comparative experiment G

Thermoplastic elastomer compositions 5 and G were prepared according to example 1. The ingredients are given in table 8, the results in table 9.

From comparison between example 5 and comparative experiment G can be concluded that the invention also is applicable for elastomers other than EPDM. The difference between example 5 and comparative experiment G is the use of oil, both compositions are not vulcanised.

**Table 8; Composition of example 5 and comparative experiment G**

| (Quantities in parts by weight) | | |
|---|---|---|
| | **5** | **G** |
| SEBS | 100 | 100 |
| PP1 | 500 | 500 |
| Antioxidant | 1.5 | 1.5 |
| Nexbase 2006 | 140 | |
| Pennzultra 1199 | | 140 |

**Table 9; Results of example 5 and comparative experiment G**

| | **5** | **G** |
|---|---|---|
| Hardness [Shore D] | 44 | 45 |
| Tensile strength [MPa] | 17.3 | 14.5 |
| Modulus 100 % [MPa] | 8.9 | 9.2 |
| Modulus 300 % [MPa] | 9.4 | 9.5 |
| Elongation [%] | 738 | 649 |
| Compression Set 72h/23°C [%] | 46 | 48 |
| Compression Set 22h/70°C [%] | 65 | 70 |
| | | |

| Notched Izod -40°C | **D** | **D/B** |
|---|---|---|
| Energy [kJ/m2] | 86 | 26 |
| | | |

| Notched Izod -50°C | D/B | B |
|---|---|---|
| Energy [kJ/m2] | 35 | 5 |
| | | |
| Notched Izod -60°C | B | |
| Energy [kJ/m2] | 7 | |

## Claims

1. Use of thermoplastic elastomer composition comprising a thermoplastic polyolefine polymer, an elastomer and an oil, **characterised in that** the oil is isoparaffinic oil and the elastomer has a gel content of less than 25%, in air bag covers, fuel lines hoses, dashboard skins, door skins, spoilers, mud flaps, seals, boots, bellows, strips and exterior trim.

2. Use of a thermoplastic elastomer composition according to Claim 1, **characterised in that** the elastomer has a gel content of about 0%.

3. Use of a thermoplastic elastomer composition according to any one of Claims 1-2 **characterised in that** the quantitiy of oil is between 50-200 parts per 100 parts of elastomer.

4. Use of a thermoplastic elastomer composition according to any of Claims 1-3, **characterised in that** the thermoplastic polyolefine polymer is polyethylene, polypropylene or a mixture thereof.

5. Use of thermoplastic elastomer composition according to any one of Claims 1-4, charaterised in that the elastomer is an olefinic elastomer.

6. Use of a thermoplastic elastomer composition according to any one of Claim 1-4, **characterised in that** the elastomer is an styrene containing block copolymer.

7. Use of a thermoplastic elastomer composition according to any one of the Claims 1-6 **characterised in that** it comprises:
A. 40-70 parts by weight of a polypropylene blockpolymer consisting of
a1. 75-90 weight % block of polypropylene homopolymer
a2. 10-25 weight % elastomeric block of random polymer of ethylene and propylene
B. 30-60 parts by weight of a further elastomer and oil.

## Patentansprüche

1. Verwendung einer thermoplastischen Elastomerzusammensetzung, enthaltend ein thermoplastisches Polyolefinpolymer, ein Elastomer und ein Öl, **dadurch gekennzeichnet, daß** es sich bei dem Öl um isoparaffinisches Öl handelt und das Elastomer einen Gelgehalt von weniger als 25% aufweist, in Airbagabdeckungen, Kraftstoffleitungen, Schläuchen, Instrumententafelhäuten, Türhäuten, Spoilern, Schmutzfängern, Dichtungen, Schutzmanschetten, Gebläsen, Streifen und Außenausstattung.

2. Verwendung einer thermoplastischen Elastomerzusammensetzung nach Anspruch 1, **dadurch gekennzeichnet, daß** das Elastomer einen Gelgehalt von etwa 0% aufweist.

3. Verwendung einer thermoplastischen Elastomerzusammensetzung nach einem der Ansprüche 1-2, **dadurch gekennzeichnet, daß** die Ölmenge zwischen 50-200 Teilen pro 100 Teile Elastomer liegt.

4. Verwendung einer thermoplastischen Elastomerzusammensetzung nach einem der Ansprüche 1-3, **dadurch gekennzeichnet, daß** es sich bei dem thermoplastischen Polyolefinpolymer um Polyethylen, Polypropylen oder eine Mischung davon handelt.

5. Verwendung einer thermoplastischen Elastomerzusammensetzung nach einem der Ansprüche 1-4, **dadurch gekennzeichnet, daß** es sich bei dem Elastomer um ein olefinisches Elastomer handelt.

6. Verwendung einer thermoplastischen Elastomerzusammensetzung nach einem der Ansprüche 1-4, **dadurch gekennzeichnet, daß** es sich bei dem Elastomer um ein Styrol enthaltendes Blockcopolymer handelt.

7. Verwendung einer thermoplastischen Elastomerzusammensetzung nach einem der Ansprüche 1-6, **dadurch gekennzeichnet, daß** sie:
A. 40-70 Gewichtsteile eines Polypropylenblockcopolymers aus
a1. 75-90 Gew.-% Block von Polypropylen-Homopolymer
a.2 10-25 Gew.-% elastomerer Block von statistisch aufgebautem Polymer von Ethylen und Propylen
B. 30-60 Gewichtsteile eines weiteren Elastomers und Öl
enthält.

## Revendications

1. Utilisation d'une composition élastomère thermoplastique comprenant un polymère polyoléfinique thermoplastique, un élastomère et une huile, **caractérisée en ce que** l'huile est une huile isoparaffinique et l'élastomère possède une teneur en gel inférieure à 25%, dans des couvercles d'airbags, des canalisations de carburant, des durites, des peaux de tableau de bord, des peaux de portières, des becquets, des bavettes garde-boue, des joints d'étanchéité, des protecteurs, des soufflets, des bandes et des moulures extérieures.

2. Utilisation d'une composition élastomère thermoplastique selon la revendication 1 **caractérisée en ce que** l'élastomère possède une teneur en gel d'environ 0%.

3. Utilisation d'une composition élastomère thermoplastique selon l'une quelconque des revendications 1-2, **caractérisée en ce que** la quantité d'huile est comprise entre 50 et 200 parties pour 100 parties d'élastomère.

4. Utilisation d'une composition élastomère thermoplastique selon l'une quelconque des revendications 1-3, **caractérisée en ce que** le polymère polyoléfinique thermoplastique est du polyéthylène, du polypropylène ou un mélange de ceux-ci.

5. Utilisation d'une composition élastomère thermoplastique selon l'une quelconque des revendications 1-4, **caractérisée en ce que** l'élastomère est un élastomère oléfinique.

6. Utilisation d'une composition élastomère thermoplastique selon l'une quelconque des revendications 1-4, **caractérisée en ce que** l'élastomère est un copolymère séquencé contenant du styrène.

7. Utilisation d'une composition élastomère thermoplastique selon l'une quelconque des revendications 1-6 **caractérisée en ce qu'**elle comprend :
A. 40-70 parties en poids d'un polymère à blocs de polypropylène constitué de
a1. 75-90% en poids d'un bloc d'homopolymère de polypropylène
a2. 10-25% en poids d'un bloc élastomère de polymère statistique d'éthylène et de propylène.
B. 30-60 parties en poids d'un autre élastomère et d'huile.
